# EUROPEAN PATENT APPLICATION

(11) **EP 4 335 629 A1**
(43) Date of publication of application: **13.03.2024**
(21) Application number: 22194631.2
(22) Date of filing: 08.09.2022
(51) Int. Cl.: B29C 70/02, B29C 70/08, B29C 70/20, B29C 70/52, F03D 1/06, B32B 5/26, B29D 99/00, B32B 5/02, B29L 31/08

(54) **PRECURED FIBROUS ELEMENTS FOR A SPAR CAP OF A WIND TURBINE BLADE**

(71) Applicant: LM Wind Power A/S, 6000 Kolding (DK)
(72) Inventor: Razeghi, Rama, Eastleigh, SO53 4SE (GB); Redmond-Gray, Dylan, Robert, Eastleigh, SO53 4SE (GB)
(74) Representative: COPA Copenhagen Patents

(57) **Abstract**

A wind turbine blade part comprising a plurality of precured fibrous elements, wherein each of the plurality of precured fibrous elements has:
- a width defined between a first side and an opposite second side,
- a thickness defined between an upper surface and an opposite lower surface,
- a length defined by a first longitudinal end and a second longitudinal end, and
- a longitudinal direction extending between the first longitudinal end and the second longitudinal end,
wherein each precured fibrous element comprises:
- a plurality of unidirectional fibre bundles extending substantially in the longitudinal direction of the precured fibrous element, and
- at least one non-woven fibre strip,

wherein the plurality of unidirectional fibre bundles and the at least one non-woven fibre strip are embedded in a polymer matrix, and
wherein the at least one non-woven fibre strip is arranged between a plurality of first unidirectional fibre bundles and a plurality of second unidirectional fibre bundles of the plurality of unidirectional fibre bundles.

## Description

### Field of the invention

The present invention relates to wind turbine blade part and a method of manufacturing a wind turbine blade part, such as a wind turbine shell part or a spar cap, wherein the wind turbine blade part comprises a plurality of precured fibrous elements. The invention further relates to the precured composite fibrous element and a method of manufacturing the precured composite fibrous element.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine blades are typically made from a fibre-reinforced polymer material and comprise a pressure side shell half and a suction side shell half. The cross-sectional profile of a typical blade includes an airfoil for creating an air flow leading to a pressure difference between both sides. The resulting lift force generates torque for producing electricity. Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from the blades being subjected to increased forces during operation, requiring improved reinforcing structures. In some known solutions, pultruded fibrous strips of material are used to design spar caps. Pultrusion is a continuous process in which fibres are pulled through a supply of liquid resin and then heated in a chamber where the resin is cured. Such pultruded strips can be cut to any desired length. As such, the pultrusion process is typically characterized by a continuous process that produces composite parts having a constant cross-section. Thus, a plurality of pultrusions can be vacuum infused together in a mould to form the spar caps.

Typically, a spar cap in a wind turbine blade is made from either carbon pultrusions or glass pultrusions. Carbon fibres are typically lighter than glass fibres by volume and have improved tensile and compressive strength.

One of the challenges of wind turbine blade manufacturing is that the composition of materials in a spar cap makes in brittle and prone to cracks. In particular, when the wind turbine blade undergoes drill and fill repairs, e.g. to repair bond lines, the spar cap is often affected and an initial small crack may propagate and become a larger crack. There is thus an ongoing need for an improved spar cap and method for incorporating such spar cap in a wind turbine blade.

It is therefore an object of the present invention to provide a wind turbine blade with an improved reinforcing structure, such as a spar cap, and to provide a method for manufacturing said wind turbine blade that minimises the risk of cracks propagating in the reinforcing structure and which allows for repairs without introducing additional mechanical weaknesses.

It is another object of the present invention to provide an optimized arrangement of materials in a spar cap.

It is another object of the present invention to provide a reinforcing structure for a wind turbine blade that is a cost efficient structure and has optimized material characteristics for reduction of crack propagations during repairs of the blade.

It is another object of the present invention to provide a suitable reinforcing structure for a wind turbine blade which can be manufactured efficiently.

### Summary of the invention

It has been found that one or more of the aforementioned objects can be obtained by providing a wind turbine blade part, such as a wind turbine shell part or a spar cap, comprising a plurality of precured fibrous elements, wherein each of the plurality of precured fibrous elements have:
- a width defined between a first side and an opposite second side,
- a thickness defined between an upper surface and an opposite lower surface,
- a length defined by a first longitudinal end and a second longitudinal end, and
- a longitudinal direction extending between the first longitudinal end and the second longitudinal end,
wherein each precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.
The at least one non-woven fibre strip is arranged between a plurality of first unidirectional fibre bundles and a plurality of second unidirectional fibre bundles of the plurality of unidirectional fibre bundles.

By embedding both unidirectional fibre bundles and non-woven fibre strips in the same precured fibrous element, a relatively stiff precured fibrous element which is less prone to crack is provided. The stiffness is provided by the unidirectionally fibres (also called UD fibres), and the reduction of cracks is provided by the non-woven fibre strips. Accordingly, the non-woven fibre strips are preferably arranged, such that they are configured to mitigate the propagation of cracks in the precured fibrous element, e.g. in either of the spanwise direction of the wind turbine blade, chordwise direction of the wind turbine blade or in the transverse direction, such as in the cross-sectional plane of the wind turbine blade.

The terms tows and rovings are used interchangeably herein. In addition, the precured fibrous elements are preferably pultruded elements (also called a pultrusion), wherein each precured fibrous element preferably comprises a resin or binding agent which is used in the pultrusion process for joining the unidirectional fibre material and the non-woven fibre material into a single pultrusion strip. Thus, the material of the pultruded element comprises unidirectional fibres, non-woven fibre strips, and a resin or binding agent. Typically, the precured fibrous element has a constant cross-section along its length.

The at least one non-woven fibre strip may be arranged to form at least a first layer. The first layer may be arranged between the plurality of first unidirectional fibre bundles and the plurality of second unidirectional fibre bundles. By arranging the at least one non-woven fibre strip between unidirectional fibre bundles the at least one non-woven fibre strip will efficiently stop cracks that may have formed in the first unidirectional fibre bundle from propagating into the second unidirectional fibre bundle, or vice versa. The at least one non-woven fibre strip also prevents cracks from propagating in the spanwise direction, i.e., along the longitudinal direction of the precured fibrous elements. Thus, the at least one non-woven fibre strip is according to a preferred embodiment arranged and configured to prevent cracks from propagating in the precured fibrous element.

Each of the precured fibrous elements may comprise a plurality of non-woven fibre strips, including the at least one non-woven fibre strip. The plurality of non-woven fibre strips may be arranged to form a plurality of separate layers. Each of the separate layers may be arranged between the plurality of first unidirectional fibre bundles on a first side of the separate layer and the plurality of second unidirectional fibre bundles on a second side of the separate layer. The plurality of non-woven fibre strips may include a first non-woven fibre strip and a second non-woven fibre strip. The plurality of non-woven strips, such as the first non-woven fibre strip and the second non-woven fibre strip, may be stacked, e.g., to form a first layer.

The separate layers may be oriented in the width direction. The separate layers may extend along the entire width or only a part of the width. The separate layers may also be oriented in the thickness direction, or with an angle to have a component in both the width direction and the thickness direction. The separate layers may also be arranged in a predefined pattern, such as several parallel layers, or a zig-zag pattern. Overall, it is understood that the separate layers may be arranged such that they prevent propagation from areas that are most likely to experience the formation of cracks. The separate layers, e.g., the first layer and the second layer, may be arranged staggered of each other in the width direction and/or in the thickness direction. The separate layers, e.g., the first layer and the second layer, may be arranged staggered of each other in the width direction and overlapping in the thickness direction or vice versa.

Thus, in a preferred embodiment, the precured fibrous elements comprise a plurality of separate layers, which are formed by one or more non-woven fibre strips, which are arranged and configured to prevent the formation of cracks from propagating from the first side to the second side of the separate layers. In other words, each separate layer functions as a stop layer.

A first non-woven fibre strip may be arranged between a plurality of first unidirectional fibre bundles and a plurality of second unidirectional fibre bundles of the plurality of unidirectional fibre bundles. A second non-woven fibre strip may be arranged between a plurality of second unidirectional fibre bundles and a plurality of third unidirectional fibre bundles of the plurality of unidirectional fibre bundles.

The first layer may extend substantially from the first side to the second side of the precured fibrous element. The first layer may extend substantially across the width of the precured fibrous element. The at least one non-woven fibre strip may extend substantially from the first side to the second side of the precured fibrous element. The first non-woven fibre strip may extend substantially from the first side to the second side of the precured fibrous element.

The first layer may extend partially between the first side and the second side of the precured fibrous element. The first layer may extend across half of the width of the precured fibrous element or one third of the of the width of the precured fibrous element or less than third of the of the width of the precured fibrous element.

The first layer may comprise a plurality of adjoining or contiguous non-woven fibre strips, including the at least one non-woven fibre strip. The first layer may extend from the first side to the second side of the precured fibrous element.

The first layer may extend substantially from the upper surface to the lower surface of the precured fibrous element. The first layer may extend substantially across the thickness or the height of the precured fibrous element. The at least one non-woven fibre strip may extend substantially from the upper surface to the lower surface of the precured fibrous element. The first non-woven fibre strip may extend substantially from the upper surface to the lower surface of the precured fibrous element.

The first layer may extend partially between the upper surface and the lower surface of the precured fibrous element. The first layer may extend across half of the thickness of the precured fibrous element or one third of the of the thickness of the precured fibrous element or less than third of the of the thickness of the precured fibrous element.

The first layer may comprise a plurality of adjoining non-woven fibre strips, including the at least one non-woven fibre strip, e.g., a first non-woven fibre strip and a second non-woven fibre strip. The first layer may extend from the upper surface to the lower surface of the precured fibrous element.

The plurality of unidirectional fibre bundles and the at least one non-woven fibre strip form a non-random pattern. Preferably, the non-random pattern is a symmetrical pattern as seen in the cross-section view of the precured fibrous element. In a preferred embodiment, the at least one non-woven fibre strip and the plurality of unidirectional fibre bundles form a non-random pattern, preferably a symmetrical pattern, as seen in a vertical cross section of the precured fibrous element. Typically, the pattern is constant over the length of the precured fibrous element. The first side, second side, upper surface and lower surface may define an essentially rectangular cross section.

The plurality of unidirectional fibre bundles and the at least one non-woven fibre strip form a random pattern. Preferably, the random pattern is a random pattern as seen in the cross-section view of the precured fibrous element.

At least one first non-woven fibre strip may be provided along the upper surface of the precured fibrous element. At least one second non-woven fibre strip may be provided along the lower surface of the precured fibrous element. At least one third non-woven fibre strip may be arranged between the at least one first and second non-woven fibre strips. The at least one first non-woven fibre strip, at least one second non-woven fibre strip and at least one third non-woven fibre strip may be spaced apart by the plurality of unidirectional fibre bundles.

At least one non-woven fibre strip may be arranged to have an oblique angle as seen in the cross-section view of the precured fibrous element. Preferably the oblique angle is 5-85 degrees as compared to the upper surface and/or lower surface. In other words, the non-woven fibre strip extends partly in the width and the thickness of the precured fibrous strip.

At least one non-woven fibre strip may be arranged to form a zig-zag pattern as seen in the cross-section view of the precured fibrous element. At least one non-woven fibre strip may be arranged to form a wavy, curved or jagged pattern as seen in the cross-section view of the precured fibrous element.

The precured fibrous elements may be formed as strips. The precured fibrous elements may be pultruded elements. The unidirectional fibre bundles may be fibre rovings or fibre tows. A bundle is to be understand as a fibre with a large number of individual strands.

The unidirectional fibre bundles may comprise carbon fibres or glass fibres.. The pultrusion fibre material preferably comprises a plurality of bundles of unidirectional fibre material. Thus, each precured fibrous element may comprise 20-200 bundles (or even more) of unidirectional fibre material in total. The bundles will usually extend in the length direction of the pultrusion plate, i.e. substantially parallel to its longitudinal axis, or parallel to the spanwise direction when arranged in the blade shell. In a preferred embodiment, the bundles of unidirectional fibre material are arranged in a regular array.

The at least one non-woven fibre strip may comprise randomly oriented fibres. The at least one non-woven fibre strip may be a chopped strand mat, a continuous strand mat or a combination thereof.

The at least one non-woven fibre strip may comprise carbon fibres, glass fibres, or aramid fibres. A strip is to be understand as a long and narrow element, such as a mat, comprising a large number of individual strands.

The at least one non-woven fibre strip may have a thickness between a first non-woven fibre strip surface of the at least one non-woven fibre strip and a second non-woven fibre strip surface of the at least one non-woven fibre strip. The said thickness may be between 0.001-2.0 mm, preferably 0.01-1.5 mm, such as 0.1-1.3 mm. Such thickness has surprisingly shown to be efficient for preventing possible cracks to propagate through the precured fibrous element or pultrusion.

The at least one non-woven fibre strip has a width between a first non-woven fibre strip side of the at least one non-woven fibre strip and a second non-woven fibre strip side of the at least one non-woven fibre strip. The said width may be between 0.1-300 mm, preferably 5-250 mm, such as 10-200 mm.

The at least one non-woven fibre strip has a length between a first non-woven fibre strip end and a second non-woven fibre strip end. The said length may be between 100 mm and 100 m.

The polymer matrix may be formed by cured epoxy, polyester, vinylester or other suitable resins. The plurality of unidirectional fibre bundles and the at least one non-woven fibre strip may be embedded in a common polymer matrix or the same polymer matrix.

The ratio between the unidirectional fibre bundles and at least one non-woven fibre strip may be between 1:1-50:1, preferably 1:1-25:1, more preferably 1:1-10:1. The ratio may be a volume or weight ratio. This was found to provide optimised properties of the precured fibrous element in terms of overall stiffness, pultrusion weight, resin uptake or degree of crack propagation reduction.

The precured fibrous element has a height or thickness, which typically extends in a substantially flapwise direction when the precured fibrous element is arranged in the blade shell. Each of the precured fibrous elements may have a thickness between 1 mm and 10 mm, preferably between 3 mm and 8 mm, and more preferably between 4 mm and 7 mm, e.g. around 5 mm.

The precured fibrous element has a width, which typically extends in a substantially chordwise direction when the precured fibrous element is arranged in the blade shell. Each of the precured fibrous elements may have a width between 20 mm and 300 mm, preferably between 50 mm and 200 mm, e.g. around 100 mm.

The precured fibrous element has a length, which typically extends in a substantially spanwise direction when the precured fibrous element is arranged in the blade shell. Each of the precured fibrous elements may have a length between 100 mm and 100 m. The length of the element is typically its largest dimension. The length of the element extends in the same direction as its longitudinal axis.

The precured fibrous elements may be stacked in an array. The precured fibrous elements may be arranged into adjacent stacks of precured fibrous elements. In a preferred embodiment, the bundles of unidirectional fibres are arranged in an array. The array of bundles will typically be constant over the length of the precured fibrous element.

Each stack of precured fibrous elements may comprise 2-30, such as 5-20 precured fibrous elements successively arranged on top of each other. Thus, each stack will usually extend in a spanwise direction of the blade. In a midsection between a root end and a tip end, each stack may comprise 8-15 layers of precured fibrous elements, whereas towards the root end and towards the tip end, the number of layered precured fibrous elements may decrease to 1-3. Thus, the stack of precured fibrous elements is preferably tapered towards both the root end and the distal end. Such configuration advantageously allows for a profile that is consistent with the thickness profile of the shell. Typically, two or more, or three or more stacks of precured fibrous elements are arranged next to each other, adjacent to each other in a substantially chordwise direction. Typically, a resin will be infused in the stack of precured fibrous elements. This can, for example, be done using vacuum-assisted resin transfer moulding.

In another aspect, the present invention relates to a method for manufacturing a wind turbine blade part, such as a spar cap, for a wind turbine blade, the method comprising:
- providing a plurality of precured fibrous elements,
- stacking the plurality of precured fibrous elements in an array such that interface regions are formed between adjacent precured fibrous elements,
- supplying resin to the plurality of precured fibrous elements and causing the resin to fill the interface regions between adjacent elements, and
- curing the resin to form the wind turbine blade part,
wherein each precured fibrous element has:
- a width defined between a first side and a second side,
- a thickness defined between a first surface and a second surface, and
- a length defined by a first longitudinal end and a second longitudinal end, and
- a longitudinal direction extending between the first longitudinal end and the second longitudinal end,
wherein each precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.

The step of arranging the precured fibrous elements on blade shell material in a mould for the blade shell component preferably comprises arranging the precured fibrous elements into adjacent stacks of precured fibrous elements, wherein adjacent refers to a substantially chordwise direction. These stacks usually extend in a substantially spanwise direction of the shell half. The step of bonding the precured fibrous elements with the blade shell material to form the blade shell component usually comprises a resin infusion step in which the precured fibrous elements and the blade shell material are infused with a resin, for example in a VARTM process. However, the precured fibrous elements may also be mutually displaced in each row of a stack.

In some embodiments, the stacked precured fibrous elements are pre-bonded together prior to being bonded to the blade shell. Alternatively, the stacked precured fibrous elements are co-bonded with the blade shell materials. In a preferred embodiment, the stacked precured fibrous elements are bonded with the blade shell material using an adhesive or in a vacuum assisted resin transfer moulding (VARTM) process.

In another aspect, the present invention relates to a precured composite fibrous element for a load-carrying structure, such as a spar cap, for a wind turbine blade, wherein the precured composite fibrous element has:
- a width defined between a first side and a second side,
- a thickness defined between a first surface and a second surface, and
- a length defined by a first longitudinal end and a second longitudinal end, and
- a longitudinal direction extending between the first longitudinal end and the second longitudinal end,
wherein the precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.

In another aspect, the present invention relates to a method for manufacturing a precured composite fibrous element for a load-carrying structure, such as a spar cap, for a wind turbine blade, the method comprising drawing a plurality of unidirectional fibre bundles and at least one non-woven fibre strip through a resin tank and a pultrusion die to form a precured fibrous element having:
- a width defined between a first side and a second side,
- a thickness defined between a first surface and a second surface, and
- a length defined by a first longitudinal end and a second longitudinal end, and
- a longitudinal direction extending between the first longitudinal end and the second longitudinal end,
wherein the precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.

The plurality of unidirectional fibre bundles and/or the at least one non-woven fibre strip may be provided on a creel. The length of the non-woven fibre strip may be 300 m when provided on a creel.

The blade shell component is usually a shell half, such as a shell half with a reinforcing structure such as a spar cap. The blade shell material may include one or more fibre layers and/or a gelcoat. The plurality of precured fibrous elements will typically extend in a spanwise direction of the shell half or of the blade. Thus, at least some of the precured fibrous elements have preferably a length corresponding to 60-95% of the blade length. A polymer resin is typically infused into precured fibrous elements following the lay-up into the shell half.

In one aspect, the present invention relates to a wind turbine blade shell component, such as a shell half, obtainable by the method of the present invention. The present invention also relates to a wind turbine blade having a pressure side shell and a suction side shell, wherein the suction and pressure side shells are joined along a leading and trailing edge of the blade. One or both of the suction and pressure side shell components further include a reinforcing structure, such as a spar cap bonded to an interior surface of the shell, wherein the spar cap includes a plurality of precured fibrous elements according to the present invention. The precured fibrous elements preferably have a continuous unbroken length along an entire length of the spar cap.

All features and embodiments discussed above with respect to the method of manufacturing a wind turbine blade shell component likewise apply to the precured fibrous element or to the reinforcing structure of the present invention and vice versa.

In another aspect, the present invention relates to a wind turbine blade or to a wind turbine blade component comprising a reinforcing structure according to the present invention, or to a wind turbine blade shell component obtainable by the afore-mentioned method of manufacturing a wind turbine blade shell component. In another aspect, the present invention relates to a wind turbine blade shell component comprising a plurality of precured fibrous elements according to the present invention.

The shell halves will typically be produced by infusing a fibre lay-up of fibre material with a resin such as epoxy, polyester or vinylester. Usually, the pressure side shell half and the suction side shell half are manufactured using a blade mould. Each of the shell parts may comprise spar caps or main laminates provided along the respective pressure and suction side shell members as reinforcing structures. The spar caps or main laminates may be affixed to the inner faces of the shell parts or be integrated in the shell parts.

The spar structure is preferably a longitudinally extending load carrying structure, preferably comprising a beam or spar box for connecting and stabilizing the shell halves. The spar structure may be adapted to carry a substantial part of the load on the blade. In some embodiments, the reinforcing structure is arranged within the pressure side shell half. In other embodiments, the reinforcing structure is arranged within the suction side shell half.

In a preferred embodiment, the pressure side shell half and the suction side shell half of the blade are manufactured in respective mould halves, preferably by vacuum assisted resin transfer moulding. According to some embodiments, the pressure side shell half and the suction side shell half each have a longitudinal extent L of 50-140 m.

As used herein, the term "vertical cross section of the precured fibrous element" refers to a cross section of the precured fibrous element on a plane perpendicular to its longitudinal axis, i.e. the axis along the length direction of the precured fibrous element, which is usually the direction in which the precured fibrous element has its greatest extension. When arranged in the blade shell, the longitudinal axis or the length extension of the precured fibrous element will usually coincide substantially with a spanwise direction of the blade.

As used herein, the term "spanwise" is used to describe the orientation of a measurement or element along the blade from its root end to its tip end. In some embodiments, spanwise is the direction along the longitudinal axis and longitudinal extent of the wind turbine blade.

As used herein, the term "horizontal" refers to a direction that is substantially parallel to the chord of the blade when the precured fibrous elements are arranged in the blade shell. The vertical direction is substantially perpendicular to the horizontal direction, extending in a substantially flapwise direction of the blade.

The terms pultrusion plates, pultruded strips, precured fibrous elements are used interchangeably herein.

### Description of the invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a wind turbine blade shell,
Fig. 4 is a schematic vertical cross section through part of a shell half with a reinforcing structure of the present invention,
Fig. 5 illustrates a pultrusion process for manufacturing the precured fibrous elements of the present invention,
Fig. 6a-6b show various profiles for a precured fibrous strip, and
Figs. 7a-7f show a schematic vertical cross-sectional view of different embodiments of a precured fibrous element.

### Detailed description of the figures

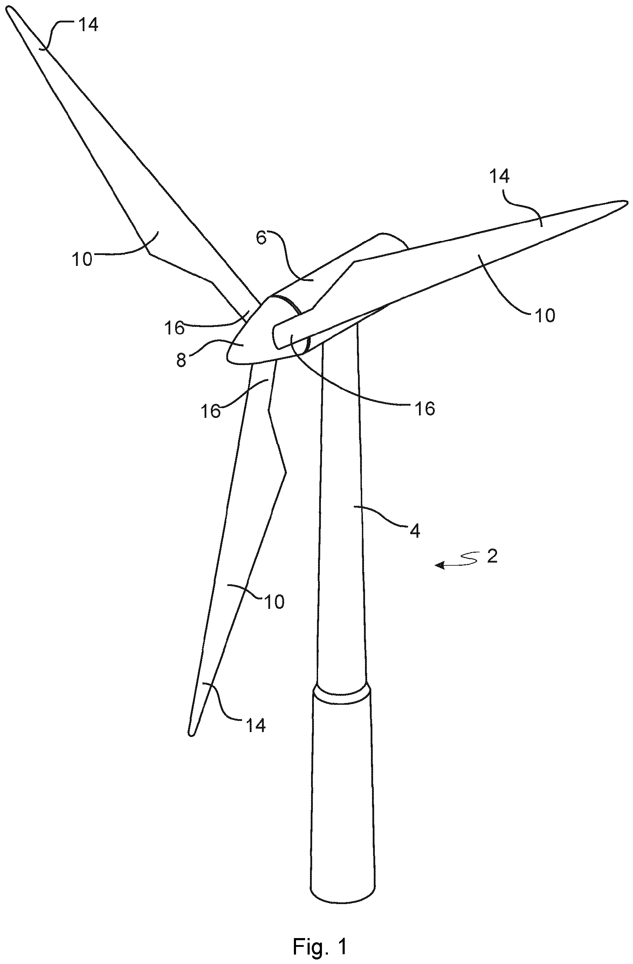

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8.

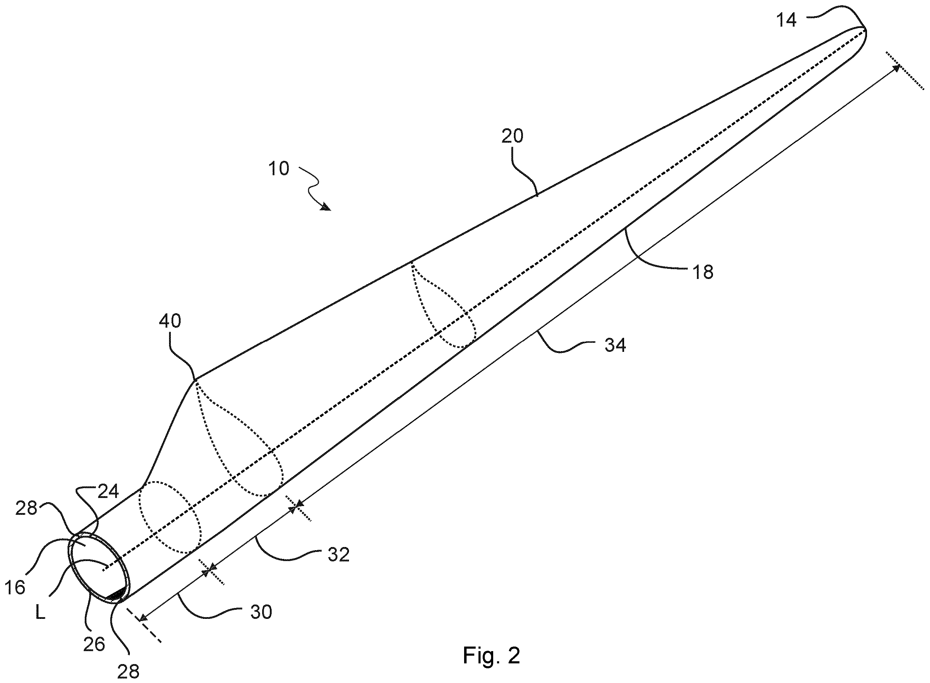

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r*from the hub. The airfoil region 34 has an airfoil profile with a chord extending between the leading edge 18 and the trailing edge 20 of the blade 10. The width of the chord decreases with increasing distance *r*from the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 26 and a suction side shell part 28 that are glued to each other along bond lines at the leading edge 18 and the trailing edge 20 of the blade.

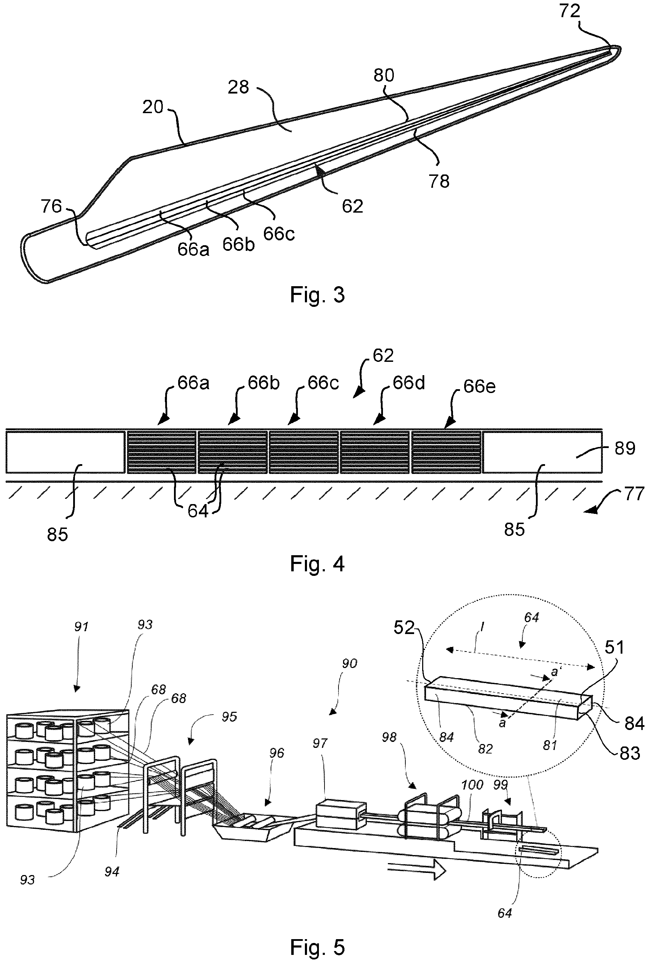

Fig. 3 shows a perspective view of a blade shell part, here illustrated with the suction side shell part 28, which is provided with a load-carrying structure or a reinforcing structure, which forms a spar cap 62 or main laminate. The spar cap 62 can be integrated into the blade shell or it can be a separate spar cap that is attached, e.g. by adhesion, to the blade shell 28. The spar cap 62 may be part of a separate spar structure. However, it is also possible to provide a blade with spar caps provided at both the pressure side shell part 26 and the suction side shell part 28, with one or more shear webs attached between the spar caps.

In the illustrated embodiment, the reinforcing structure 62 has a spanwise extent and comprises adjacent stacks 66a, 66b, 66c of precured fibrous elements. The elongate reinforcing structure 62 has a tip end 74, closest to the tip end of the blade, and a root end 76, closest to the root end of the blade. The elongate reinforcing structure 62 also comprises a spanwise extending front edge 78, which is closest to the leading edge 18 of the blade, and a spanwise extending rear edge 80, which is closest to the trailing edge 20 of the blade.

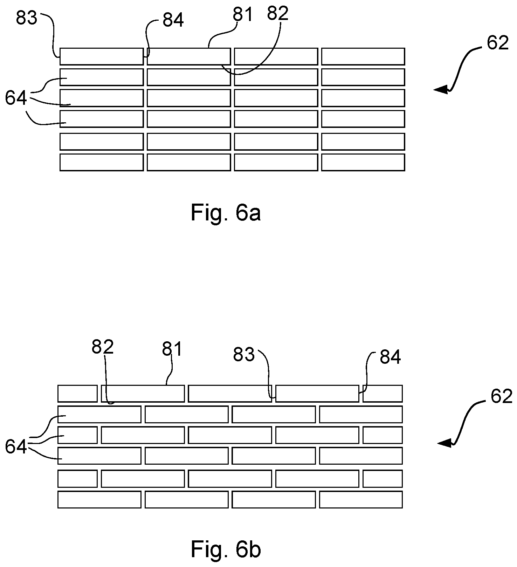

Fig. 4 is a schematic vertical cross section through part of a shell half with a reinforcing structure 62 of the present invention, as seen from the root end of the blade. The reinforcing structure 62, such as a spar cap, comprises a plurality of precured fibrous elements 64 according to the present invention, arranged in adjacent stacks 66a-66e, which are arranged on blade shell material 89 in mould 77 for the blade shell component, such as a shell half. Core material 85 is arranged on either chordwise side of the reinforcing structure 62. The stacked precured fibrous elements 64 are then bonded with the blade shell material 89 to form the blade shell component, such as the shell half with the spar cap. The precured fibrous elements may e.g. be arranged as shown in Fig. 4, Fig. 6a, or Fig. 6b.

Fig. 5 illustrates a pultrusion process for manufacturing the precured fibrous elements 64 of the present invention. The pultrusion process makes use of a pultrusion system 90 which comprises a portion for receiving a plurality of bobbins 93 which each supplies a bundle of unidirectional fibres 68 from a creel 91. A non-woven fibre strip 94 is provided, preferably on a creel.

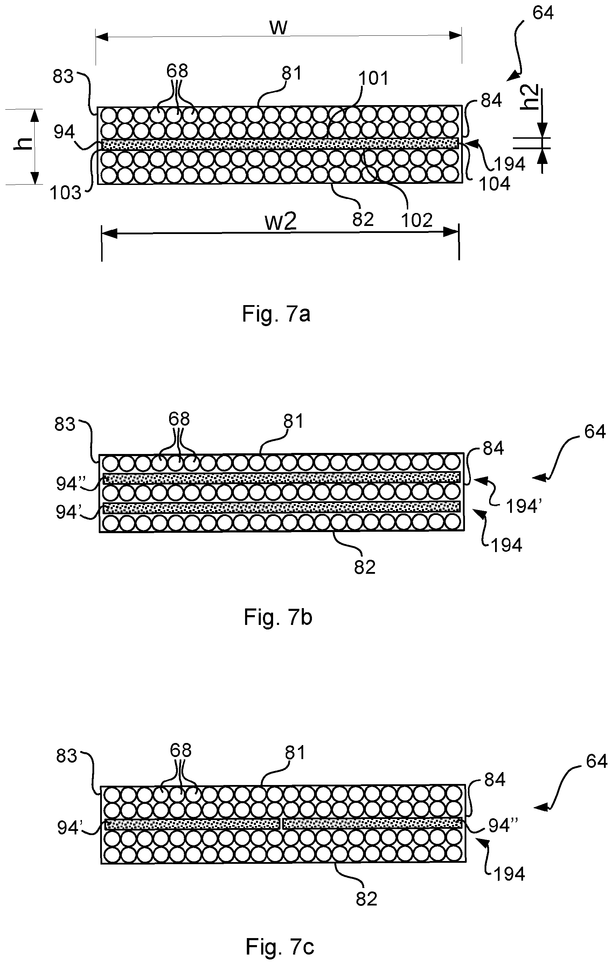

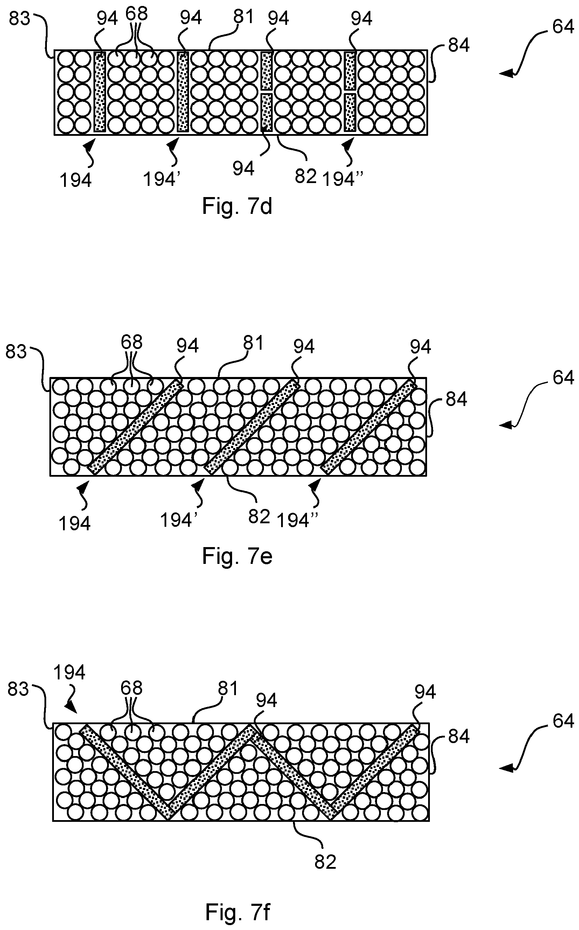

The unidirectional fibre bundles 68 and the non-woven fibre strips 94 are pulled through guide plates 95, resin bath 96, and heated die 97 by a pulling mechanism 98. The pultrusion string 100 is cut into individual precured fibrous elements 64 by a cutter 99. The shaped impregnated fibres are cured and can optionally be wound onto a roll. The guide plates and/or the die may take the form of a spreader or inlet comprising multiple apertures, each aperture receiving a respective bundle of unidirectional fibre or non-woven fibre strip. The apertures can be spaced and they are located so as to guide the unidirectional fibre bundles and non-woven fibre strips to form a desired pattern of unidirectional fibre material and non-woven fibre material in the precured fibrous elements 64. The enlarged view of the precured fibrous element 64 in Fig. 5 also illustrates its longitudinal axis La and its length I. The height/thickness h and width w of the precured fibrous element are illustrated in Fig. 7, see plate 64. The pultruded strips 64 each have a first longitudinal end 51 and a second longitudinal end 52 with a length I defined between the first longitudinal end 51 and the second longitudinal end 52, a first side 83 and a second side 84 with a width w defined as the distance between the first side 83 and the second side 84, and an upper surface 81 and a lower surface 82 with a thickness h defined as the distance between the upper surface 81 and the lower surface 82.

Figs. 6a-6b show embodiments for a cross-section of a spar cap 62. In a cross-sectional view, the strips 64 may be stacked right on top of each other as shown in Fig. 6a (similar to the embodiment shown in Fig. 4), or they may be displaced between layers, e.g. as shown in Fig. 6b with partially overlapping strips. The precured fibrous strips 64 comprise unidirectionally oriented reinforcement fibres, such as glass fibres or carbon fibres, oriented in the longitudinal direction. Further, the strips 64 are preferably pultruded elements.

The upper surface 81 and lower surface 82 are defined in relation to how the pultruded strips are laid up, and the upper surface 81 will typically be arranged towards the inner surface of the spar cap 62, whereas the lower surface 82 will typically face towards the outer surface of the spar cap 62, as seen in relation to the blade shell 28.

Variations of the patterns of fibre material in a precured fibrous element are illustrated in Figs. 7a-7f, as seen from the line a-a in Fig. 5. Each precured fibrous element 64 in the various embodiments illustrated in Figs. 7a-7f comprises at least one non-woven fibre strip 94, indicated as elongated shapes with a random pattern, and a plurality of unidirectional fibre bundles 68, indicated as white circular shapes. Each precured fibrous element comprises a top surface 81, an opposing bottom surface 82, a first side 83, a second side 84, a height/thickness h and a width w.

As seen in the various embodiments of Fig. 7, the precured fibrous element 64 comprises at least one non-woven fibre strip 94 and a plurality of unidirectional fibre bundles 68 arranged in a pattern, as seen in a vertical cross section of the precured fibrous element 64. The non-woven fibre strip 94 has a width w2 between a first non-woven fibre strip side 103 and a second non-woven fibre strip side 104 and a height/thickness h2 between a first non-woven fibre strip surface 101 and a second non-woven fibre strip surface 102. Further, the non-woven fibre strip 94 has a length between a first non-woven fibre strip end and a second non-woven fibre strip end (not illustrated).

The non-woven fibre strip may be arranged to form a separate layer 194, 194', 194" and may extend across the entire width of the precured fibrous element 64, i.e. from the first side 83 to the second side 84, as illustrated in Figs. 7a-7c. The layer 194, 194' may comprise one non-woven fibre strip 94 as illustrated in Figs. 7a-7b or two or more adjoining or contiguous non-woven fibre strips 94, such as a first non-woven fibre strip 94' and a second non-woven fibre strip 94", as illustrated in Fig. 7c. The precured fibrous element 64 may comprise more than one layer, such as a first layer 194, a second layer 194' and a third layer 194", as illustrated in Figs. 7b, 7d, 7e. The first layer 194 may comprise a first non-woven fibre strip 94' and the second layer 194' may comprise a second non-woven fibre strip 94".

The layer of non-woven fibre strip 194, 194', 194" may extend across the entire thickness, i.e. from the top surface 81 to the bottom surface 82, as illustrated in Figs. 7d-7f, where the layer 194,194', 194" extends orthogonally in Fig. 7d and with an oblique angle in Figs. 7e-7f.

In all of the embodiments, the non-woven fibre strips or separate layers formed by the non-woven fibre strips act as a stop layer, which minimise or prevent the risk of cracks emerging from propagating in the precured element and forming a mechanical weak point in the main laminate or spar cap. The non-woven fibre strips or separate layers formed by the non-woven fibre strips also allows repairs to be carried out while lowering the risk that cracks are formed in the spar cap or main laminate.

The invention is not limited to the embodiments described herein and may be modified or adapted without departing from the scope of the present invention.

### EXEMPLARY EMBODIMENTS

1. A wind turbine blade part, such as a wind turbine shell part or a spar cap, comprising a plurality of precured fibrous elements, wherein each of the plurality of precured fibrous elements has:
   - a width defined between a first side and an opposite second side,
   - a thickness defined between an upper surface and an opposite lower surface,
   - a length defined by a first longitudinal end and a second longitudinal end, and
   - a longitudinal direction extending between the first longitudinal end and the second longitudinal end,
   wherein each precured fibrous element comprises:
   - a plurality of unidirectional fibre bundles extending substantially in the longitudinal direction of the precured fibrous element, and
   - at least one non-woven fibre strip,
   wherein the plurality of unidirectional fibre bundles and the at least one non-woven fibre strip are embedded in a polymer matrix.
2. Wind turbine blade part according to item 1, wherein the at least one non-woven fibre strip is arranged between a plurality of first unidirectional fibre bundles and a plurality of second unidirectional fibre bundles of the plurality of unidirectional fibre bundles.
3. A wind turbine blade part according to item 2, wherein the at least one non-woven fibre strip is arranged to form at least a first layer, which is arranged between the plurality of first unidirectional fibre bundles and the plurality of second unidirectional fibre bundles,
4. A wind turbine blade part according to item 3, wherein each of the precured fibrous elements comprises a plurality of non-woven fibre strips, including the at least one non-woven fibre strip, and wherein the plurality of non-woven fibre strips is arranged to form a plurality of separate layers,
   wherein each of the separate layers is arranged between the plurality of first unidirectional fibre bundles on a first side of the separate layer and the plurality of second unidirectional fibre bundles on a second side of the separate layer.
5. Wind turbine blade part according to item 3, wherein the first layer extends substantially from the first side to the second side of the precured fibrous element.
6. Wind turbine blade part according to item 5, wherein the first layer comprises a plurality of adjoining non-woven fibre strips, including the at least one non-woven fibre strip, and wherein the first layer extends from the first side to the second side of the precured fibrous element.
7. Wind turbine blade part according to any of the preceding items, wherein a first non-woven fibre strip is arranged between a plurality of first unidirectional fibre bundles and a plurality of second unidirectional fibre bundles of the plurality of unidirectional fibre bundles, and a second non-woven fibre strip is arranged between a plurality of second unidirectional fibre bundles and a plurality of third unidirectional fibre bundles of the plurality of unidirectional fibre bundles.
8. Wind turbine blade part according to item 3, wherein the first layer extends substantially from the upper surface to the lower surface of the precured fibrous element.
9. Wind turbine blade part according to item 8, wherein the first layer comprises a plurality of adjoining non-woven fibre strips, including the at least one non-woven fibre strip, and wherein the first layer extends from the upper surface to the lower surface of the precured fibrous element.
10. Wind turbine blade part according to any of the preceding items, wherein the plurality of unidirectional fibre bundles and the at least one non-woven fibre strip form a non-random pattern, preferably a symmetrical pattern as seen in the cross-section view of the precured fibrous element.
11. Wind turbine blade part according to any of the preceding items, wherein at least one first non-woven fibre strip is provided along the upper surface of the precured fibrous element, at least one second non-woven fibre strip is provided along the lower surface of the precured fibrous element, and at least one third non-woven fibre strip is arranged between the at least one first and second non-woven fibre strips, and wherein the at least one first non-woven fibre strip, at least one second non-woven fibre strip and at least one third non-woven fibre strip are spaced apart by the plurality of unidirectional fibre bundles.
12. Wind turbine blade part according to any of the preceding items, wherein the at least one non-woven fibre strip is arranged to have an oblique angle as seen in the cross-section view of the precured fibrous element.
13. Wind turbine blade part according to any of the preceding items, wherein the at least one non-woven fibre strip is arranged to form a zig-zag pattern as seen in the cross-section view of the precured fibrous element.
14. Wind turbine blade part according to any of the preceding items, wherein the precured fibrous elements are formed as strips.
15. Wind turbine blade part according to any of the preceding items, wherein the precured fibrous elements are pultruded elements.
16. Wind turbine blade part according to any of the preceding items, wherein the unidirectional fibre bundles are fibre rovings or fibre tows.
17. Wind turbine blade part according to any of the preceding items, wherein the unidirectional fibre bundles comprise carbon fibres or glass fibres.
18. Wind turbine blade part according to any of the preceding items, wherein the at least one non-woven fibre strip comprises randomly oriented fibres.
19. Wind turbine blade part according to item 20, wherein the at least one non-woven fibre strip is a chopped strand mat, a continuous strand mat or a combination thereof.
20. Wind turbine blade part according to any of the preceding items, wherein the at least one non-woven fibre strip comprises carbon fibres, glass fibres, or aramid fibres.
21. Wind turbine blade part according to any of the preceding items, wherein the at least one non-woven fibre strip has a thickness between a first non-woven fibre strip surface and a second non-woven fibre strip surface, wherein the thickness is between 0.001-2.0 mm, preferably 0.01-1.5 mm, such as 0.1-1.3 mm.
22. Wind turbine blade part according to any of the preceding items, wherein the at least one non-woven fibre strip has a width between a first non-woven fibre strip side and a second non-woven fibre strip side, wherein the width is between 1-300 mm, preferably 5-250 mm, such as 10-200 mm.
23. Wind turbine blade part according to any of the preceding items, wherein the polymer matrix is formed by cured epoxy, polyester, vinylester or other suitable resins.
24. Wind turbine blade part according to any of the preceding items, wherein the ratio between the unidirectional fibre bundles and at least one non-woven fibre strip is between 1:1-50:1, preferably 1:1-25:1, more preferably 1:1-10:1.
25. Wind turbine blade part according to any of the preceding items, wherein each of the precured fibrous elements has a thickness between 1 mm and 10 mm, preferably between 3 mm and 8 mm, and more preferably between 4 mm and 7 mm, e.g. around 5 mm.
26. Wind turbine blade part according to any of the preceding items, wherein each of the precured fibrous elements has a width between 30 mm and 300 mm, preferably between 50 mm and 200 mm, e.g. around 100 mm.
27. Wind turbine blade part according to any of the preceding items, wherein each of the precured fibrous elements has a length between 100 mm and 100 m.
28. Wind turbine blade part according to any of the preceding items, wherein the precured fibrous elements are stacked in an array, e.g. arranged into adjacent stacks of precured fibrous elements.
29. A method for manufacturing a wind turbine blade part, such as a spar cap, for a wind turbine blade, the method comprising:
   - providing a plurality of precured fibrous elements,
   - stacking the plurality of precured fibrous elements in an array such that interface regions are formed between adjacent precured fibrous elements,
   - supplying resin to the plurality of precured fibrous elements and causing the resin to fill the interface regions between adjacent elements, and
   - curing the resin to form the wind turbine blade part,
   wherein each precured fibrous element has:
   - a width defined between a first side and a second side,
   - a thickness defined between a first surface and a second surface, and
   - a length defined by a first longitudinal end and a second longitudinal end, and
   - a longitudinal direction extending between the first longitudinal end and the second longitudinal end,
   wherein each precured fibrous element comprises:
   - a plurality of unidirectional fibre bundles extending substantially in the longitudinal direction of the precured fibrous element, and
   - at least one non-woven fibre strip,
   wherein the plurality of unidirectional fibre bundles and the at least one non-woven fibre strip are embedded in a polymer matrix.
30. Method according to item 31, wherein the wind turbine blade part has any of the characteristics of any of the items 1-30.
31. A precured composite fibrous element for a load-carrying structure, such as a spar cap, for a wind turbine blade, wherein the precured composite fibrous element has:
   - a width defined between a first side and a second side,
   - a thickness defined between a first surface and a second surface, and
   - a length defined by a first longitudinal end and a second longitudinal end, and
   - a longitudinal direction extending between the first longitudinal end and the second longitudinal end,
   wherein the precured fibrous element comprises:
   - a plurality of unidirectional fibre bundles extending substantially in the longitudinal direction of the precured fibrous element, and
   - at least one non-woven fibre strip,
   wherein the plurality of unidirectional fibre bundles and the at least one non-woven fibre strip are embedded in a polymer matrix.
32. A method for manufacturing a precured composite fibrous element for a load-carrying structure, such as a spar cap, for a wind turbine blade, the method comprising drawing a plurality of unidirectional fibre bundles and at least one non-woven fibre strip through a resin tank and a pultrusion die to form a precured fibrous element having:
   - a width defined between a first side and a second side,
   - a thickness defined between a first surface and a second surface, and
   - a length defined by a first longitudinal end and a second longitudinal end, and
   - a longitudinal direction extending between the first longitudinal end and the second longitudinal end,
   wherein the precured fibrous element comprises:
   - a plurality of unidirectional fibre bundles extending substantially in the longitudinal direction of the precured fibrous element, and
   - at least one non-woven fibre strip,
   wherein the plurality of unidirectional fibre bundles and the at least one non-woven fibre strip are embedded in a polymer matrix.
33. Method according to item 34, wherein the plurality of unidirectional fibre bundles and/or the at least one non-woven fibre strip are provided on a creel.

### List of reference numerals

- 4: tower
- 6: nacelle
- 8: hub
- 10: blades
- 14: blade tip
- 16: blade root
- 18: leading edge
- 20: trailing edge
- 26: pressure side shell part
- 28: suction side shell part
- 30: root region
- 32: transition region
- 34: airfoil region
- 40: shoulder
- 51: first longitudinal end
- 52: second longitudinal end
- 62: spar cap/reinforcing structure
- 64: precured fibrous element
- 66: stack of precured fibrous elements
- 68: unidirectional fibre bundles
- 74: tip end of reinforcing structure
- 76: root end of reinforcing structure
- 77: mould
- 78: front edge of reinforcing structure
- 80: rear edge of reinforcing structure
- 81: top surface
- 82: bottom surface
- 83: first side
- 84: second side
- 85: core material
- 89: shell material
- 90: pultrusion system
- 91: creel
- 93: bobbin with bundles of unidirectional fibres
- 94: non-woven fibre strip
- 94': first non-woven fibre strip
- 94": second non-woven fibre strip
- 95: guide plate
- 96: resin bath
- 97: heated die
- 98: pulling mechanism
- 99: cutter
- 100: pultrusion string
- 101: first non-woven fibre strip surface
- 102: second non-woven fibre strip surface
- 103: first non-woven fibre strip side
- 104: second non-woven fibre strip side
- 194: first layer
- 194': second layer
- 194": third layer

- L: length
- I: length of precured fibrous element
- w: width of precured fibrous element
- h: thickness precured fibrous element
- w2: width of non-woven fibre strip
- h2: thickness of non-woven fibre strip

## Claims

1. A wind turbine blade part comprising a plurality of precured fibrous elements, wherein each of the plurality of precured fibrous elements has:
- a width defined between a first side and an opposite second side,
- a thickness defined between an upper surface and an opposite lower surface,
- a length defined by a first longitudinal end and a second longitudinal end, and
- a longitudinal direction extending between the first longitudinal end and the second longitudinal end,
wherein each precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix, and
wherein the at least one non-woven fibre strip is arranged between a plurality of first unidirectional fibre bundles and a plurality of second unidirectional fibre bundles of the plurality of unidirectional fibre bundles.

2. A wind turbine blade part according to claim 1, wherein the at least one non-woven fibre strip is arranged to form at least a first layer, which is arranged between the plurality of first unidirectional fibre bundles and the plurality of second unidirectional fibre bundles.

3. A wind turbine blade part according to claim 2, wherein each of the precured fibrous elements comprises a plurality of non-woven fibre strips, including the at least one non-woven fibre strip, and wherein the plurality of non-woven fibre strips is arranged to form a plurality of separate layers,
wherein each of the separate layers is arranged between the plurality of first unidirectional fibre bundles on a first side of the separate layer and the plurality of second unidirectional fibre bundles on a second side of the separate layer.

4. Wind turbine blade part according to claim 2, wherein the first layer extends substantially from the first side to the second side of the precured fibrous element.

5. Wind turbine blade part according to claim 2, wherein the first layer extends substantially from the upper surface to the lower surface of the precured fibrous element.

6. Wind turbine blade part according to any of the preceding claims, wherein the at least one non-woven fibre strip is arranged to have an oblique angle as seen in the cross-section view of the precured fibrous element.

7. Wind turbine blade part according to any of the preceding claims, wherein the at least one non-woven fibre strip is arranged to form a zig-zag pattern as seen in the cross-section view of the precured fibrous element.

8. Wind turbine blade part according to any of the preceding claims, wherein the at least one non-woven fibre strip comprises randomly oriented fibres.

9. Wind turbine blade part according to any of the preceding claims, wherein the at least one non-woven fibre strip has a thickness between a first non-woven fibre strip surface and a second non-woven fibre strip surface, wherein the thickness is between 0.001-2.0 mm, preferably 0.01-1.5 mm, such as 0.1-1.3 mm.

10. Wind turbine blade part according to any of the preceding claims, wherein the at least one non-woven fibre strip has a width between a first non-woven fibre strip side and a second non-woven fibre strip side, wherein the width is between 1-300 mm, preferably 5-250 mm, such as 10-200 mm.

11. Wind turbine blade part according to any of the preceding claims, wherein the precured fibrous elements are stacked in an array, e.g., arranged into adjacent stacks of precured fibrous elements.

12. A method for manufacturing a wind turbine blade part, such as a spar cap, for a wind turbine blade, the method comprising:
- providing a plurality of precured fibrous elements,
- stacking the plurality of precured fibrous elements in an array such that interface regions are formed between adjacent precured fibrous elements,
- supplying resin to the plurality of precured fibrous elements and causing the resin to fill the interface regions between adjacent elements, and
- curing the resin to form the wind turbine blade part,
wherein each precured fibrous element has:
- a width defined between a first side and a second side,
- a thickness defined between a first surface and a second surface, and
- a length defined by a first longitudinal end and a second longitudinal end, and
- a longitudinal direction extending between the first longitudinal end and the second longitudinal end,
wherein each precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.

13. Method according to claim 12, wherein the wind turbine blade part has any of the characteristics of any of the claims 1-11.

14. A precured composite fibrous element for a load-carrying structure, such as a spar cap, for a wind turbine blade, wherein the precured composite fibrous element has:
- a width defined between a first side and a second side,
- a thickness defined between a first surface and a second surface, and
- a length defined by a first longitudinal end and a second longitudinal end, and
- a longitudinal direction extending between the first longitudinal end and the second longitudinal end,
wherein the precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.

15. A method for manufacturing a precured composite fibrous element for a load-carrying structure, such as a spar cap, for a wind turbine blade, the method comprising drawing a plurality of unidirectional fibre bundles and at least one non-woven fibre strip through a resin tank and a pultrusion die to form a precured fibrous element having:
- a width defined between a first side and a second side,
- a thickness defined between a first surface and a second surface, and
- a length defined by a first longitudinal end and a second longitudinal end, and
- a longitudinal direction extending between the first longitudinal end and the second longitudinal end,
wherein the precured fibrous element comprises:
- a plurality of unidirectional fibre bundles extending substantially in the longitudinal direction of the precured fibrous element, and
- at least one non-woven fibre strip,
wherein the plurality of unidirectional fibre bundles and the at least one non-woven fibre strip are embedded in a polymer matrix.
